# EUROPEAN PATENT SPECIFICATION

(11) **EP 3 697 521 B1**
(45) Date of publication and mention of the grant of the patent: **13.03.2024**
(21) Application number: 17811374.2
(22) Date of filing: 18.10.2017
(51) Int. Cl.: B01D 53/22, A61K 9/08, B01D 53/32, H05H 1/00

(54) **PROCESS AND APPARATUS FOR PRODUCING REACTIVE SPECIES OF OXYGEN AND / OR NITROGEN IN LIQUID SOLUTION OR IN GAS FORM**
VERFAHREN UND VORRICHTUNG ZUR HERSTELLUNG VON REAKTIVEN SPEZIES VON SAUERSTOFF UND / ODER STICKSTOFF IN FLÜSSIGER LÖSUNG ODER IN GASFORM
PROCESSUS ET APPAREIL DE PRODUCTION D'ESPÈCES RÉACTIVES D'OXYGÈNE ET/OU D'AZOTE DANS UNE SOLUTION LIQUIDE OU SOUS FORME GAZEUSE

(43) Date of publication of application: 26.08.2020
(73) Proprietor: Barco, Giovanni, 56127 Pisa (IT)
(72) Inventor: Barco, Giovanni, 56127 Pisa (IT)
(74) Representative: Leotta, Antonio
(86) International application number: PCT/IB2017/056465
(87) International publication number: WO 2019/077391

(56) References cited:
- WO-A1-2016/096751
- WO-A1-2017/161153
- JP-A- 2000 199 060
- US-A1- 2012 258 034
- US-A1- 2017 101 314

## Description

### Technical Field

The present invention relates to a process and apparatus for producing reactive species of oxygen and/or nitrogen in liquid solution.

### Background Art

Radicals (or free radicals) are very reactive molecular entities having a very brief average life, consisting of an atom or a molecule formed by several atoms that has an unpaired electron: this electron makes the radical extremely reactive, able to bind to other radicals or subtract an electron from other nearby molecules.

Radicals play an important role in phenomena such as combustion, polymerization and photochemistry, and many other chemical processes, including those affecting human physiology. In the latter case the nitrogen superoxide and monoxide have a very important function in regulating many biological processes, such as vascular tone control. These latter radicals fall into two types of radicals particularly important in human physiology and commonly called reactive oxygen species (ROS) and reactive nitrogen species (RNS).

Reactive oxygen species, ROSs, are the free radicals that are more widely distributed. The most important ROS are the superoxide anion O2- , the hydrogen peroxide H2O2 and the hydroxyl radical • OH.

Nitric oxide (NO) and peroxynitrite (ONOO-) are the most important reactive nitrogen-based species (RNS).

ROS are characterized by a high oxidative capacity, higher than the molecular oxygen, which in the water has a redox potential of -0.16V, a feature that depends both on the particular charge distribution and on its own redox potential. The higher the ratio of charge/volume, the more ROS will be reactive and will have a short life, as it will quickly reach its stability by tearing electrons from nearby atoms or molecules. However, although their very short half-life is due to their strong oxidative activity, other factors make them even more reactive, such as temperature, pH, or the presence of particular contaminant molecules.

The complexity of production, but above all their short half-life, which results in a rapidly decreasing efficiency, strongly restricts therapeutic use as problems of correct dosage are highlighted.

The same inventor of the present invention proposed some years ago a device for the production of sterilized ozonized water for therapeutic purposes protected by Italian patent no. 0001374223. Even ozone, just like ROS and RNS (as RONS), has a very short half-life and in order to make it usable, the aforementioned patent proposes a device comprising an ozone generator to feed ozone to a semipermeable membrane filter on which other side flows sterile water from a reservoir. In the filter the ozone passes through the membrane per osmosis and enters the solution in sterile water. Thanks to a peristaltic pump, the solution containing ozone is sent to a needle for topical or intravenous feeding. The technique of producing an aqueous ozone solution allows it to extend the ozone's useful life, however, this technique, as far as useful, is not decisive in the case of RONS since the problem of knowing the concentration of RONS in the solution remains unresolved therefore it is not possible to establish a correct therapeutic dosage.

Moreover, this technique of dissolving RONS in aqueous solution is not practicable if it is necessary to feed these in gas form.

Further prior art is disclosed in WO 2016/096751 and WO 2017/161153.

### Summary of Invention

The object of the present invention is therefore to propose an apparatus and a process for producing RONS as set forth in the claims, particularly in order to make them available for therapeutic uses.

Another object of the present invention is to propose an apparatus and a process for the production of RONS which is capable of extending the RONS half-life to allow their administration as: oral, intravenous, arterial, topical, ocular, intraparenchymal, intraarticular and others.

Another object of the present invention is to propose an apparatus and a process for the production of ROS, in particular superoxide anion, which enables effective determination of the amount of such ROSs in order to be able to accurately and safely define their dosage in therapeutic use.

According to the invention, these and other objects have been obtained by a process and apparatus according to the attached independent claims wherein the production of RONS is effected by the densification and ionization of pure oxygen or of a mixture of oxygen-containing gas, its allotropic forms and impurities. The densification and ionization is done by sputtering techniques in which the oxygen or its mixtures are placed in a ionization chamber and in which as the cathode and the anode are used materials with low workfunction and high temperature resistance, so not able to release atoms.

An advantage of the invention is that the use of plasma technology allows RONS to be produced in high quantities and at competitive costs.

Further features and advantageous embodiments of the invention are highlighted in the dependent claims.

### Brief Description of Drawings

These and further advantages and features of the invention will be better understood by any expert in the technical sector from the following description, provided by way of non-limiting example, with the help of the attached drawing in which:

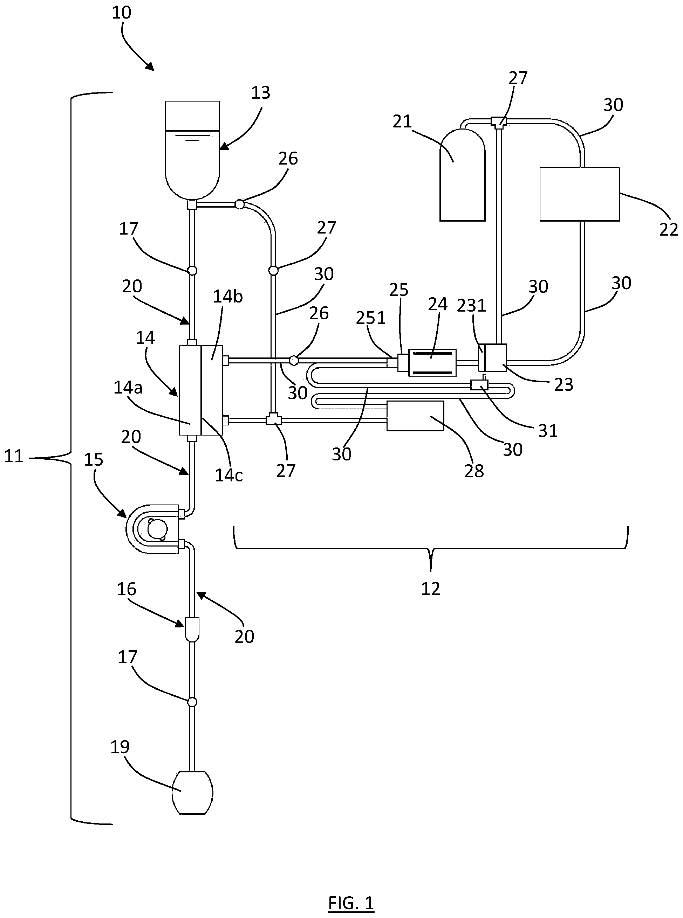

- Figure 1 shows a schematic block diagram of an apparatus according to the invention.

### Description of Embodiments

With reference to the accompanying Figure 1, an apparatus for the production of reactive oxygen or nitrogen species according to a preferred embodiment of the present invention is pointed as a whole with 10.

The apparatus 10 comprises a fluid transport circuit, 11, and a gas transport circuit, 12.

The gas transport circuit 12 comprises an oxygen source, 21, an allotropic gas mixture generator, 22, gas supply means, 23, electrical field generating organs, 231, a plasma sputtering device, 24, plasma collection means, 25, electromagnetic separation organs, 251, non-return valves, 26, a semipermeable membrane filter, 14, three-way taps, 27, an allotrope destroyer, 28, a flow regulator, 29, and gas conduits, 30, for connecting said components.

The process of the invention performed through the aforementioned gas transport circuit 12 providing the above components comprises *inter alia* the following steps:
- feeding a gas mixture to a ionizing chamber of the plasma sputtering device 24 with the gas mixture comprising oxygen and preferably only oxygen and/or nitrogen and/or their allotropes and/or inert gases and with any possible impurities amounting parts per million,
- transformation, within said ionization chamber, of said gas mixture in a plasma containing RONS,
- extraction of said plasma from said ionization chamber.

The oxygen source 21 is advantageously a medical oxygen cylinder. Alternatively, as an oxygen source 21, an atmospheric gas distiller is used, which by using zeolites or other substances capable of separating atmospheric air into the various constituents, concentrates molecular oxygen. Still alternatively, the oxygen source can be an oxygen supply means of an oxygen distribution network, for example in a hospital facility or the like.

The allotropic gas mixture generator 22 is a device suitable for producing ozone and various ROS and RNS using various methods such as high energy ultraviolet light, electric shocks, chemical methods, water electrolysis, etc. Although the devices usable for this purpose can be very different from each other, the allotropic gas mixture generator 22 by receiving as an inlet high purity oxygen (> 99%) is suitable for producing a gas mixture composed of at least O2, O3, ROS (reactive oxygen species) and RNS (reactive nitrogen species) when the inlet mixture in addition to oxygen also contains nitrogen molecules and their percentages in the mixture will vary according to the method used for the production of the gas mixture itself.

The gas mixture supply means 23 receive gas mixture from the oxygen source 21 and from the allotropic gas mixture generator 22 and regulate its introduction into a ionization chamber of the plasma sputtering device 24. The gas mixture supply means may be constituted by a mixing tap, a three-way tap, and may include a pressure regulator or other component suitable for determining the correct composition and pressure of the gas mixture entering the ionization chamber of the plasma sputtering device 24.

Before entering the ionization chamber of the plasma sputtering device 24, the gas mixture is subjected to pass through an electric field generated by the electrical field generating organs 231 which is able to orient the gas molecules. Consequently, the gas molecules of the gas mixture entering the plasma sputtering device 24 are oriented so that the electron beam emitted by the device 24 hits a single atom of the molecule resulting in a higher concentration of ions. The electrical field generating organs 231 are preferably constituted by capacitors between whose plates the gas mixture stream is made to pass.

In the ionization chamber of the plasma sputtering device 24, the gas oxygen mixture is treated to obtain plasma, through discharge means, with a sputtering device.

Plasma sputtering devices 24 advantageously used in the apparatus 10 and to implement the method of the present invention can be of three different types: 1) continuous discharge devices, where a small separation between the electrodes causes the anode to lie within the negative glow, while the positive column and the dark space of Faraday are not present, and therefore the spatial discharge density and the current density allow an electron position such as to transform the atoms and/or molecules of oxygen composing the incoming gas mixture in ROS (reactive oxygen species), particularly superoxide anion, and in the presence of nitrogen molecules also of RNA (reactive nitrogen species); 2) radiofrequency discharge and 3) microwave discharge.

The continuous discharge system is the simplest and most practical way to transform the gaseous oxygen mixture into plasma. The method consists in applying a continuous potential difference between two opposing electrodes inserted into a ionization chamber containing an oxygen stream or a gas mixture of oxygen allotropes at low pressure oxygen from 0. 1 to 3 bar. The minimum potential difference needed to power a discharge between the two electrodes is defined as discharge potential and depends on the interelectrodic distance. The continuous discharge device in the present invention is used for the transformation of the gas phase allotropic mixture of oxygen or of the simple molecular oxygen into plasma-ROS (Oxygen Reacting Species). In this case, the discharging power of the continuous discharge system for the production of plasma-ROS can be regulated through an anode-cathode distance variator, a pressure regulator of the allotropic gas mixture of oxygen of said supply means 23 and a variator of the continuous interelectrodic potential difference.

In a plasma sputtering device 24 according to the present invention for the production of plasma, both the glow discharge and the arc discharge system can be used.

In a plasma sputtering device 24 according to the present invention, the densification and ionization of the allotropic gas mixture of oxygen and/or molecular oxygen is preferably obtained by arc discharge system or by implementing several variants of the arc discharge system itself. In particular, in the plasma sputtering device 24 according to the invention, specific cathode arc configurations are advantageously used, which are referred to as the hollow cathode, commonly referred to as the Hollow Cathode (HC). Generally, these are configurations that exploit the thermal emission of electrons by a metal or by a compound with a particularly low workfunction to ionize the allotropic mixture of oxygen flowing inside them, thus producing a plasma. This plasma is also called arc or discharge of the hollow cathode (namely, HCA or HCD) because it is an electrical discharge between an arbitrary anode (such as the vacuum chamber walls or ionization chamber) and a cathode providing a hollow structure. In certain types of hollow cathode configurations the discharge is triggered by the thermoelectric emission of materials that are heated using a resistance instead of glow discharge. The heat generated by the internal plasma column is then enough to sustain the discharge. After the HCA is triggered, it is formed a layer with negative spatial charge density generated by the thermal emission of electrons the effect of which is not only to lower the work and the temperature of the cathode, but also to accelerate electrons toward plasma to cause ROS formation.

In the ionizing chamber of the plasma sputtering device 24, once the glow discharge or the arc discharge is activated, the cathode heating, due to the ion bombing, determines the emission of electrons by thermal effect, and this phenomenon is the easier the lower is the workfunction of the metal chosen for the cathode. In the plasma sputtering device 24, it is preferably used steel which at relatively low cost is one of the values of 4.4 eV still acceptable. Alternatively, as a material for cathode, thallium (Ta) is used, which is usually the most used for the production of hollow cathode sources, being a refractory metal that is thus able to withstand the high temperatures reached during discharge and has one of the lowest workfunction values: 4. 1 eV.

According to the present invention, the plasma sputtering device 24 is used not to bomb with positive ions a target material either solid or liquid, but to use the electrons that are formed during the sputtering process to bomb the allotropic gas mixture of the oxygen brought in the ionized state, so that the oxygen molecule defined as "degenerate" because characterized by two unpaired electrons of the same spin and positioned on two different orbits (π*2p), meet the reductive phenomena (accept electrons) forming ROS (reactive oxygen species).

There are several types of plasma sputtering devices among which the ones most adapted to ROS production and therefore preferably used in the apparatus of the invention are those with diode sputtering technology, Thermoionic Source Diode Sputtering, DC magnetron sputtering, (Diode Sputtering) and 13.56 MHz Radio Frequency Sputtering and Ion-Beam Sputtering (IBS).

It should be noted that during sputtering the relaxation of the excited species generates UV-visible radiation, while the cathode and the anode, due to the ions and fast electrons bombing, emit X-ray, so the plasma sputtering device 24 must be properly shielded and also the cathode and the anode are appropriately cooled.

Plasma-ROS formation occurs when the gas mixture, including oxygen and in some cases even nitrogen and/or allotropic mixtures of oxygen and/or of nitrogen, is introduced into the ionization chamber. Oxygen is a reactive and not inert gas such as Argon (the latter is the most used gas in sputtering technologies). By providing a potential difference, "free electrons" are accelerated far away from the negative cathode charge. In their course they will hit oxygen atoms and from the impact they will be able to transform them into ROS, especially superoxide anions, and with a chain process the plasma is being produced.

The negatively charged oxygen ions are accelerated towards the anode forming a plasma-ROS current that will spread throughout the chamber, but with enough momentum to be extracted from through holes provided in the target material. Accordingly to what above, the plasma collection means 25 is advantageously said target material providing through holes. In the present invention, the possibility of expelling atoms from the substrate material by electrons collision on the same target solid material is avoided by the fact that electrons bombing does not produce sputtering. In fact, unless the energy involved is many hundreds of eV, sputtering is not obtained since the transfer of kinetic energy from light electrons to the target atoms, of many orders of magnitude heavier, is very inefficient and therefore under a threshold energy a pure plasma-ROS is obtained as there will be no sputtered atoms released by the target material that would render the plasma-ROS impure. Basically, target material does not expel atoms (sputtering) thanks to the fact that the plasma sputtering device 24 is operated below a threshold energy level below which the energy associated with the electrons with which the target material is bombed is not enough to cause sputtering. Therefore, in the present invention, the plasma sputtering device 24 (and the sputtering process in which it is carried out) is not conventionally used to mechanically deposit extremely thin films on supports such as lenses, CDs or the like, but it is a system that, due to low operating temperatures and the effectiveness of electronic bombing of the allotropic gas mixture of oxygen or oxygen itself, produces a pure plasma-ROS rich in superoxide anions.

The plasma ROS extracted by the plasma collection means 25 is passed through electromagnetic separation organs 251, preferably consisting of electromagnetic inductors, which separate the molecules outgoing from the device 24 in function of their electric charge.

Once passed through the electromagnetic separation organs 251, the plasma-ROS can be sent towards the semipermeable membrane filter 14 or to the allotrope destroyer 28. Between the electromagnetic separation organs 251 and the allotrope destroyer 28 there is a tap 31 that allows the collection of the ROS in gas form.

An alternative and simplified embodiment of the invention provides a device and a process for the production of RONS in gas form wherein apparatus 10 comprises exclusively the components described herein, and not the fluid transport circuit 11. Also, in a process and apparatus according to the invention the allotropic gas mixture generator 22 may as well not be present, and in that case the plasma sputtering device 24 would be fed exclusively by the oxygen source 21 and therefore with molecular oxygen and possible impurities.

According to a further alternative embodiment of the invention, the gas transport circuit 12 includes, in addition to the oxygen source 21, a source of nitrogen to feed nitrogen, in an appropriate amount, to the tap 27 and thus to enrich with nitrogen the gas mixture provided to the device 24 or to the allotropic gas mixture generator 22.

According to a further embodiment, in a gas transport circuit 12 according to the invention, the plasma device 24 or the allotropic gas mixture generator device 22 are fed, by organs of a membrane pump, with air, atmospheric or purified, instead of with oxygen and/or nitrogen or their allotropic forms in purity. In this case, the gas mixture fed to the plasma sputtering device 24 also contains argon. According to other embodiments, other inert gases are also present in the gas mixture fed to the plasma sputtering device 24.

Returning now to the embodiment of Fig. 1, the plasma-ROS sent to the semipermeable membrane filter 14 is introduced at controlled pressure through an inlet opening of a gas side 14b of the filter 14 and then it exits from an outlet opening of said gas side 14b. Within the semipermeable membrane filter 14, the ROSs pass, by osmotic pressure, a semipermeable membrane 14c to get into solution with a fluid that flows through a fluid side 14a of the filter 14 itself. The semipermeable membrane filter 14 and its operating modes will be described in detail later.

The gas mixture with a reduced amount of ROS comes out of the filter 14 and encounters a tap 27 through which it can be directed to the allotrope destroyer 28 or to a fluid reservoir 13 of the fluid transport circuit 11.

The gas conduit 30 connecting the tap 27 to the fluid reservoir 13 is provided with a flow regulator 29 and with a non-return valve 26. Similarly, also the conduit 30 connecting the plasma collection means 25 with the filter 14 is provided with at least one non-return valve 26, in order to prevent that gas or gas mixed with fluid may flow back towards the plasma sputtering device 24.

The fluid transport circuit 11 comprises the fluid reservoir 13, the semipermeable membrane filter 14, a peristaltic pump 15, a drip chamber, 16, one or more flow regulators, 17, an elastomer, 19, and tubes, 20, for connecting said components.

More in detail, a first tube 20 connects the fluid reservoir 13 with the semipermeable membrane filter 14 to inject the fluid from the reservoir 13 into the fluid side 14a of the filter 14 through a relative inlet opening. Between the reservoir 13 and the filter 14 it is placed a flow regulator 17 to regulate the flow of fluid. A second tube 20 collects the fluid leaving an outlet opening of the fluid side 14a of the filter 14, crosses the peristaltic pump 15, reaches a drip chamber 16 and then, passed a flow regulator 17 for regulating or interrupting the flow, reaches the elastomer 19.

The reservoir 13, preferably in flexible material, is adapted to contain a fluid for injectable solutions which may be water or pyrogenic water, possibly supplemented with drugs or other substances such as lipids, sugars, amino acids, antibiotics, antivirals, human albumin, methylgliosal, pyruvate or more.

The fluid transport circuit 11 advantageously further comprises additional components not shown in the figure, such as pressure and flow meter, bubble detectors, bubble-blister systems, and others. In particular, a sensor associated with the peristaltic pump 15 is advantageously adapted to count the number of therapies performed or the operating time of the pump, with said sensor connected to control means of the machine that interrupt the operation of the machine itself upon reaching a preset value of the number of therapies or of the operating time, to allow replacement of the semipermeable membrane filter 14.

The plasma containing RONS is fed to the semipermeable membrane filter 14 arranged to be fed on the other side of the membrane 14c with a fluid for injectable solutions, so that RONS present in the plasma may cross the membrane 14c to enter solution into the fluid for injectable solutions. The fluid for injectable solutions with RONS in solution is collected and conveyed to the output of the semipermeable membrane filter 14.

The semipermeable membrane filter 14 allows the RONS to be dissolved in a liquid solution. The membrane 14c is, between the gas rich in RONS and the fluid, an interface of selective separation that allows to physically and chemically modify the anionic species permeated and to adjust and/or prevent the permeation of some molecular species, in particular ozone.

In filter 14, the gas mixture of plasma-ROS, being subjected to a transmembrane pressure above 0.1 bar, crosses the semipermeable membrane as a gas solvent to dissolve in the fluid without producing macroscopic gas bubbles and possible viral and bacterial contaminations and this thanks to the very small diameter of the pores of the semipermeable membrane that let RONS pass but not the water molecules.

The membrane 14c is equipped with a semipermeable part that allows the passage of the reactive oxygen and nitrogen (RONS) species only. The membrane 14c is advantageously an artificial membrane consisting of a thin solid polymer layer which not only determines the membrane selectivity, but also the volumetric permeation flow, i.e. the volume of gas crossing the membrane per area unit of the membrane and per time unit. The membrane in this case is used not only for a selective separation of negative charge molecules derived from oxygen and nitrogen, but the membrane 14c also has the ability to adjust the volumetric permeation flow passing through the membrane itself. However, there is an inverse relationship between volumetric permeation flow and membrane selectivity, so they are advantageously selected membranes that have acceptable permeability and selectivity. To overcome this limitation inherent the nature of the semipermeable membranes, the allotropic gas mixture generator 22 is advantageously provided with an electromagnetic capacitor output capable of creating an electromagnetic field sieve capable of selecting the molecules having a negative charge and a mass lower than ozone, resulting in an electromagnetic selective transport of specific ionic species only and in particular of RONS usable for therapeutic purposes.

In the present invention, the membrane 14c is used to separate molecular species dissolved in a gas phase, in order to obtain an extemporaneous aqueous solution "saturated" in RONS. The possibility of obtaining a saturated solution allows to not have to measure in volume or weight the amount of RONS dissolved in the solution as the amount of RONS is determined by the measuring volumes of solution used because it is saturated with RONS. Quantitative studies have shown that the aqueous solution, saturated in RONS, produced by the device in question with semipermeable neutral membrane and with total effective surface area of 1 square meter, consisting of hollow fibers with an inside diameter of 150-220 µm and with the length of the fibers of 15 cm and with the loading volume of 250 ml and with the volume of cavity (allotropic mixture) of 100 ml, is of 0.7 grams/liter molality with device operating times greater than 6 minutes.

In a filter 14 of the apparatus 10 of the invention both non-electric (neutral) membranes and membranes with electrical features (ion-exchange) can be used. In both cases, important characteristics for a membrane 14c usable according to the invention are: long-term operation, chemical resistance to oxidation and high permeability and selectivity.

Neutral membranes usable in filter 14 according to the invention may contain various chemical constituents: mixed membranes obtained by mixing inorganic, ceramic, metallic membranes, and also membranes obtained from synthetic polymers with predominance of perfluoropolymer, polyamides, silicone rubbers and polysulfones, while membranes made from cellulose based modified natural products can be used for their mechanical, thermal and chemical stability.

Preferably, the membrane 14c used in filter 14 is constituted by a polysulfone layer and by a second layer negatively charged to trigger nanofiltrations phenomena.

Alternatively, membranes 14c used in filter 14 are made of cellulose acetate, polyamide or ceramic material.

The membrane 14c used in the filter 14 may also be an ultrafiltration membrane or a microfiltration membrane.

In addition, an important aspect of the filter 14 concerns the configuration of semipermeable membranes as the RONS mixture in gas phase must be evenly distributed on the surface of the semipermeable membrane and the flow of water on the other side of the filter must assume a laminar distribution on the surface of the membrane itself. In this regard there are different types of semipermeable membranes with different configurational structure: flat, tubular, coiled spiral and hollow fiber membranes.

Flat sheets when used in the apparatus of the invention have a support structure on which the membrane is blocked and which hermetically divides the two volumes that look at the two sides of the membrane: the gas side 14b and the fluid side 14a. A flat membrane filter 14 is made up of a single membrane, where on one of the two surfaces passes the RONS gas mixture at pressures not exceeding 1.5 pascal, while on the other side of the membrane (skin) flows the laminar layer of water. According to a preferred embodiment of the invention, a flat membrane filter as described above is advantageously disposed between the plasma collection means 25 and the tap 27 close to the tap 27 and is constituted by a support which blocks the flat membrane which hermetically separates the two faces that in this case split two sides both lapped by gas mixture in which on the upstream side there is a gas mixture rich of RONS maintained at 0.1-1.5 Bar pressures and on the other there is the RONS gas mixture passed through the membrane. One of the walls of the outer casing of the tap 27, which also includes the aforementioned flat membrane filter, has a pick-up valve for picking up the RONS gas mixture. According to further embodiments it is possible to use a tap 27 comprising flat membranes disposed with multiple layers.

As mentioned above, a coiled spiral membrane can be used in the filter 14. This membrane layout comprises several flat semi-membranes which are spirally wound on a cylinder generally made of plastic material. The functional unit of this module is the "envelope" consisting of two sheets separated by a fine mesh (spacing material), within this space spreads the gas rich of RONS. The sheets are separated by the spacing material and sealed on three sides, while the side towards the collector for the passage of the RONS gas is not sealed and forms the envelope entry. The single envelopes are separated by a mesh polyethylene spacer (brine spacer) which, being in contact with the skin of the two sheets, not only keeps the envelopes separate but allows the longitudinal flow of the water which will enter and exit through two collecting tubes at the two ends of the cylinder on which envelopes are wound and that act as inlet and outlet manifolds of the water. One or more modules as outlined above may be inserted into a cylindrical housing called "vessel" consisting of an oxidation-resistant material such as a polycarbonate.

Still alternatively, a tubular membrane is used in the filter 14. They are membrane supported by a core made up of a perforated tube that can be made up of a variety of materials, such as ceramic , stainless steel or plastics. The preformed tube constitutes a porous substrate of support wherein the polymer tubular membrane is melted. The core, besides supporting the semipermeable membrane, reinforces it against the radial pressure forces.

Still alternatively in the filter 14 hollow fiber membranes are used. The hollow fibers are made up of cellulose triacetate, polyamide, polysulfone, etc. The fibers can be a linear hank or U-bent hank. Their end caps are sealed in a single block of epoxy resin that, as cut, allows, on one hand, the input of water into the central lumens (hole side) of the fibers and, from the other end, the output of the OPL, still through the central lumens (hole side) of the central fibers. The hank, once cut, is contained in a shell, which can be made of polycarbonate, stainless steel or oxidants resistant plastic material that has a gas inlet tube for the RONS gas mixture and an outlet tube, still for the same mixture.

The RONS gas mixture, under pressure, spreads through the spaces separating the hollow fibers. The RONS gas mixture diffuses and crosses the wall of the hollow fibers, melting in the water licking the membrane's inner surface (skin), forming the aqueous solution saturated of RONS, which will then flow out of the filter.

In a filter 14 of the present invention, the two ends of the hollow fibers hank are advantageously sealed by two caps, isolating the volume of the lumen from the volume of the shell, where through the first flows water towards the volume of the lumen of the opposite side, while through the shell volume will pass and stay the RONS gas mixture. Pure water flowing through the volume of the lumen will feed at a flow rate and at a specific pressure the membrane fibers (advantageously in polysulfone), draining at the other end of the filter, while the RONS gas mixture passing through the volume of the shell will permeate the walls of the hollow fibers, melting in the water passing through the hollow fibers.

The water, or pyrogenic water, containing a solution saturated in RONS comes out of the filter 14 and by the action of the peristaltic pump 15 is introduced into the elastomer 19 that can then be used in phleboclysis or other therapeutic approaches.

Alternatively, instead of elastomer 19, the apparatus of the invention provides a needle or other device for venous access.

An alternative embodiment of the apparatus of the invention does not include the picking up of the plasma-ROS in gas form with the apparatus exclusively devoted to the production of RONS in liquid solution.

The process and apparatus of the present invention have been described above in preferred embodiments but equivalent variants can be conceived without departing from the protection scope of the invention.

## Claims

1. Process for the production of reactive oxygen or nitrogen species (RONS) in liquid solution, said process comprising the steps of:
- feeding a gas mixture to a ionization chamber of a plasma sputtering device (24), said gas mixture comprising oxygen and/or oxygen allotropes,
- transformation within said ionization chamber, of said gas mixture in plasma containing RONS,
- extraction of said plasma from said ionization chamber by making it pass through holes provided in a target material of said plasma sputtering device (24), with said target material not sputtering atoms thanks to the fact that said plasma sputtering device (24) is operated below a threshold energy level below which the energy associated with the electrons with which the target material is bombed does not allow the sputtering process,
- feeding said plasma containing RONS to a gas side (14b) of a semipermeable membrane filter (14) arranged to be fed at a fluid side (14a) with a fluid for injectable solutions, so that RONS present in said plasma can pass through said membrane (14c) to get into solution with said fluid for injectable solutions, said fluid for injectable solutions with said RONS in solution being collected and conveyed at the output of said semipermeable membrane filter.

2. Process for the production of reactive oxygen or nitrogen species (RONS) according to claim 1, **characterized in that** said gas mixture comprises exclusively oxygen or it also comprises nitrogen and / or oxygen allotropes and / or nitrogen allotropes and / or inert gases and with any possible impurities.

3. Process according to the preceding claims, **characterized in that** before entering into said ionization chamber said gas mixture is subjected to pass through an electric field capable of orienting the gas molecules.

4. Process according to one of the preceding claims, **characterized in that** at the output of said ionization chamber said plasma is let pass through electromagnetic separation organs (251) which separate the molecules outgoing from the plasma sputtering device (24) according to their electric charge.

5. Apparatus (10) for the production of reactive oxygen or nitrogen species (RONS) suitable for carrying out the process of claim 1, said apparatus providing:
- a gas transport circuit (12) comprising:
- a plasma sputtering device (24),
- gas mixture supply means (23) for feeding a gas mixture comprising oxygen at a controlled pressure to a ionization chamber of said plasma sputtering device (24), and
- plasma collection means (25) for collecting plasma from said ionization chamber;
- a fluid transport circuit (11) comprising:
- a fluid reservoir (13) for containing fluids for injectable solutions,
- a semipermeable membrane filter (14),
- at least one peristaltic pump (15) arranged along said circuit (11) for feeding fluid for injectable solutions from said reservoir (13) to a fluid side (14a) of said semipermeable membrane filter (14) and from said fluid side (14a) of said semipermeable membrane filter (14) to storage or supply means (19)
said plasma collection means (25) of said gas transport circuit (12) being arranged to feed said plasma-ROS to a gas side (14b) of said semipermeable membrane filter (14)..

6. Apparatus (10) for the production of reactive oxygen or nitrogen species (RONS) according to the preceding claim, **characterized in that** said gas transport circuit (12) comprises an oxygen source (21), said gas mixture supply means (23) being adapted to extract gas from said oxygen source (21) and feed it into said ionization chamber of said plasma sputtering device (24).

7. Apparatus (10) for the production of reactive oxygen or nitrogen species (RONS) according to the preceding claim, **characterized in that** said gas transport circuit (12) comprises an allotropic gas mixture generator (22) disposed to be supplied with oxygen by said oxygen source (21) and to supply an allotropic oxygen mixture to said gas mixture supply means (23).

8. Apparatus for the production of reactive oxygen or nitrogen species (RONS) according to claim 5 or followings, **characterized in that** said gas transport circuit (12) comprises electrical field generating organs (231) arranged before the inlet of said ionization chamber of said plasma sputtering device (24), said gas mixture being subjected to pass through the electric field generated by said electrical field generating organs (231), which are capable of orienting gas molecules of said gas mixture.

9. Apparatus for the production of reactive oxygen or nitrogen species (RONS) according to claim 5 or followings, **characterized in that** said gas transport circuit (12) comprises a nitrogen source for feeding nitrogen, in an appropriately adjustable amount, to said plasma sputtering device (24) or to said allotropic gas mixture generator (22).

10. Apparatus for the production of reactive oxygen or nitrogen species (RONS) according to claim 5 or followings, **characterized in that** said fluid transport circuit (11) comprises at least one sensor associated with said peristaltic pump (15) and suitable for counting the number of therapies performed or the operating time of said pump (15), with said sensor connected to control means of said apparatus which interrupt the operation of the apparatus itself upon reaching a preset value of the number of therapies or operating time, in order to allow the replacement of said semipermeable membrane filter (14).

## Patentansprüche

1. Verfahren zur Herstellung von reaktiven Sauerstoff- oder Stickstoffspezies (RONS) in flüssigen Lösungen, wobei das Verfahren die folgenden Schritte umfasst:
- Einspeisen eines Gasgemisches in eine Ionisationskammer einer Plasmazerstäubungsvorrichtung (24), wobei das Gasgemisch Sauerstoff und/oder Sauerstoffallotrope enthält,
- Umwandlung des Gasgemisches in der Ionisationskammer in ein RONS-haltiges Plasma,
- Extraktion des Plasmas aus der lonisationskammer, indem es durch Löcher geleitet wird, die in einem Targetmaterial der Plasmazerstäubungsvorrichtung (24) vorgesehen sind, wobei das Targetmaterial keine Atome zerstäubt, da die Plasmazerstäubungsvorrichtung (24) unterhalb eines Schwellenenergieniveaus betrieben wird, unterhalb dessen die mit den Elektronen, mit denen das Targetmaterial beschossen wird, verbundene Energie den Zerstäubungsprozess nicht ermöglicht,
- Zuführen des RONS enthaltenden Plasmas zu einer Gasseite (14b) eines semipermeablen Membranfilters (14), das so angeordnet ist, dass es an einer Fluidseite (14a) mit einem Fluid für injizierbare Lösungen gespeist wird, so dass die in dem Plasma vorhandenen RONS durch die Membran (14c) hindurchtreten können, um mit dem Fluid für injizierbare Lösungen in Lösung zu gehen, wobei das Fluid für injizierbare Lösungen mit den RONS in Lösung am Ausgang des semipermeablen Membranfilters gesammelt und gefördert wird.

2. Verfahren zur Herstellung von reaktiven Sauerstoff- oder Stickstoffspezies (RONS) nach Anspruch 1, **dadurch gekennzeichnet, dass** das Gasgemisch ausschließlich Sauerstoff und/oder Stickstoff und/oder deren Allotrope und/oder Inertgase und eventuelle Verunreinigungen enthält.

3. Verfahren nach einem der vorhergehenden Ansprüche, **dadurch gekennzeichnet, dass** das Gasgemisch vor dem Eintritt in die Ionisationskammer ein elektrisches Feld durchläuft, das die Gasmoleküle ausrichten kann.

4. Verfahren nach einem der vorstehenden Ansprüche, **dadurch gekennzeichnet, dass** man das Plasma am Ausgang der lonisationskammer durch elektromagnetische Trennorgane (251) laufen lässt, die die aus der Plasmazerstäubungsvorrichtung (24) austretenden Moleküle entsprechend ihrer elektrischen Ladung trennen.

5. Vorrichtung (10) zur Herstellung von reaktiven Sauerstoff- oder Stickstoffspezies (RONS), die zur Durchführung des Verfahrens nach Anspruch 1 geeignet ist, wobei die Vorrichtung Folgendes umfasst:
- einen Gastransportkreislauf (12) das Folgendes beinhaltet:
- eine Plasmazerstäubungsvorrichtung (24),
- eine Gasgemisch-Zuführungseinrichtung (23) zum Zuführen eines Sauerstoff enthaltenden Gasgemischs bei einem gesteuerten Druck zu einer Ionisationskammer der Plasmazerstäubungsvorrichtung (24), und
- Plasmasammelmittel (25) zum Sammeln des Plasmas aus der lonisationskammer;
- einen Fluidtransportkreislauf (11), umfassend:
- ein Fluidreservoir (13) zur Aufnahme von Fluiden für injizierbare Lösungen,
- einen semipermeablen Membranfilter (14),
- mindestens eine peristaltische Pumpe (15), die entlang des Kreislaufs (11) angeordnet ist, um Fluid für injizierbare Lösungen aus dem Reservoir (13) zu einer Fluidseite (14a) des semipermeablen Membranfilters (14) und von der Fluidseite (14a) des semipermeablen Membranfilters (14) zu einer Speicher- oder Versorgungseinrichtung (19) zuzuführen,
wobei die Plasmasammeleinrichtung (25) des Gastransportkreislaufs (12) so angeordnet ist, dass sie das Plasma-ROS zu einer Gasseite (14b) des semipermeablen Membranfilters (14) führt.

6. Vorrichtung (10) zur Herstellung von reaktiven Sauerstoff- oder Stickstoffspezies (RONS) nach dem vorhergehenden Anspruch, **dadurch gekennzeichnet, dass** der Gastransportkreislauf (12) eine Sauerstoffquelle (21) umfasst, wobei die Gasgemisch-Zuführungseinrichtung (23) so ausgelegt ist, dass sie Gas aus der Sauerstoffquelle (21) extrahiert und in die Ionisationskammer der Plasmazerstäubungsvorrichtung (24) einspeist.

7. Vorrichtung (10) zur Herstellung von reaktiven Sauerstoff- oder Stickstoffspezies (RONS) nach dem vorhergehenden Anspruch, **dadurch gekennzeichnet, dass** der Gastransportkreislauf (12) einen Generator (22) für ein allotropes Gasgemisch umfasst, der so angeordnet ist, dass er von der Sauerstoffquelle (21) mit Sauerstoff versorgt wird und ein allotropes Sauerstoffgemisch an die Gasgemisch-Zuführungseinrichtung (23) liefert.

8. Vorrichtung zur Herstellung von reaktiven Sauerstoff- oder Stickstoffspezies (RONS) nach Anspruch 5 oder folgenden, **dadurch gekennzeichnet, dass** der Transportkreislauf (12) elektrische Felderzeugungsorgane (231) umfasst, die vor dem Einlass der Ionisationskammer der Plasmazerstäubungsvorrichtung (24) angeordnet sind, wobei das Gasgemisch dem Durchgang durch das von den elektrischen Felderzeugungsorganen (231) erzeugte elektrische Feld unterworfen wird, die in der Lage sind, die Gasmoleküle des Gasgemisches auszurichten.

9. Vorrichtung zur Herstellung von reaktiven Sauerstoff- oder Stickstoffspezies (RONS) nach Anspruch 5 oder folgenden, **dadurch gekennzeichnet, dass** der Gastransportkreislauf (12) eine Stickstoffquelle zur Zufuhr von Stickstoff in einer angemessen einstellbaren Menge zu der Plasmazerstäubungsvorrichtung (24) oder zu dem allotropen Gasgemischgenerator (22) umfasst.

10. Vorrichtung zur Herstellung von reaktiven Sauerstoff- oder Stickstoffspezies (RONS) nach Anspruch 5 oder folgenden, **dadurch gekennzeichnet, dass** der Fluidtransportkreislauf (11) mindestens einen Sensor umfasst, der mit der peristaltischen Pumpe (15) verbunden und geeignet ist, die Anzahl der durchgeführten Therapien oder die Betriebszeit der Pumpe (15) zu zählen, wobei der Sensor mit Steuermitteln der Vorrichtung verbunden ist, die den Betrieb der Vorrichtung selbst bei Erreichen eines voreingestellten Wertes der Anzahl der Therapien oder der Betriebszeit unterbrechen, um den Austausch des semipermeablen Membranfilters (14) zu ermöglichen.

## Revendications

1. Procédé de production d'espèces réactives de l'oxygène ou de l'azote (RONS) dans des solutions liquides, ledit procédé comprenant les étapes suivantes:
- introduire un mélange gazeux dans une chambre de ionisation d'un dispositif de pulvérisation de plasma (24), ledit mélange gazeux comprenant de l'oxygène et/ou des allotropes de l'oxygène,
- transformation, dans ladite chambre de ionisation, dudit mélange gazeux en plasma contenant des RONS,
- extraction dudit plasma de ladite chambre de ionisation en le faisant passer à travers des trous ménagés dans un matériau cible dudit dispositif de pulvérisation de plasma (24), ledit matériau cible ne pulvérisant pas d'atomes grâce au fait que ledit dispositif de pulvérisation de plasma (24) est opéré en dessous d'un niveau d'énergie seuil au-dessous duquel l'énergie associée aux électrons avec lesquels le matériau cible est bombardé ne permet pas le processus de pulvérisation,
- alimenter ledit plasma contenant des RONS vers un côté gazeux (14b) d'un filtre à membrane semi-perméable (14) conçu pour être alimenté du côté fluide (14a) par un fluide pour solutions injectables, de sorte que les RONS présents dans ledit plasma puissent passer à travers ladite membrane (14c) pour entrer en solution avec ledit fluide pour solutions injectables, ledit fluide pour solutions injectables avec lesdits RONS en solution étant collecté et acheminé à la sortie dudit filtre à membrane semi-perméable.

2. Procédé de production d'espèces réactives de l'oxygène ou de l'azote (RONS) selon la revendication 1, **caractérisé en ce que** ledit mélange gazeux comprend exclusivement de l'oxygène et/ou de l'azote et/ou leurs allotropes et/ou des gaz inertes et d'éventuelles impuretés.

3. Procédé selon les revendications précédentes, **caractérisé en ce que** avant d'entrer dans ladite chambre de ionisation, ledit mélange gazeux est soumis au passage d'un champ électrique capable d'orienter les molécules de gaz.

4. Procédé selon l'une des revendications précédentes, **caractérisé en ce que** à la sortie de ladite chambre de ionisation on laisse passer ledit plasma à travers des organes de séparation électromagnétique (251) qui séparent les molécules sortant du dispositif de pulvérisation du plasma (24) en fonction de leur charge électrique.

5. Appareil (10) pour la production d'espèces réactives de l'oxygène ou de l'azote (RONS) apte à mettre en oeuvre le procédé de la revendication 1, ledit appareil comportant:
- un circuit de transport de gaz (12) comprenant:
- un dispositif de pulvérisation de plasma (24),
- des moyens d'alimentation de mélange gazeux (23) pour acheminer un mélange gazeux comprenant de l'oxygène à une pression contrôlée vers une chambre de ionisation dudit dispositif de pulvérisation de plasma (24), et
- des moyens de collecte du plasma (25) pour collecter le plasma de ladite chambre de ionisation;
- un circuit de transport de fluide (1 1 ) comprenant:
- un réservoir de fluide (13) destiné à contenir des fluides pour solutions injectables,
- un filtre à membrane semi-perméable (14),
- au moins une pompe péristaltique (15) disposée le long dudit circuit (11) pour alimenter en fluide des solutions injectables depuis ledit réservoir (13) vers un côté fluide (14a) dudit filtre à membrane semi-perméable (14) et depuis ledit côté fluide (14a) dudit filtre à membrane semi-perméable (14) vers des moyens de stockage ou d'approvisionnement (19),
lesdits moyens de collecte de plasma (25) dudit circuit de transport de gaz (12) étant disposés pour alimenter ledit plasma-ROS vers un côté gazeux (14b) dudit filtre à membrane semi-perméable (14).

6. Appareil (10) pour la production d'espèces réactives de l'oxygène ou de l'azote (RONS) selon la revendication précédente, **caractérisé en ce que** ledit circuit de transport de gaz (12) comprend une source d'oxygène (21), lesdits moyens d'alimentation en mélange de gaz (23) étant adaptés pour extraire du gaz de ladite source d'oxygène (21) et l'introduire dans ladite chambre de ionisation dudit dispositif de pulvérisation cathodique de plasma (24).

7. Appareil (10) pour la production d'espèces réactives de l'oxygène ou de l'azote (RONS) selon la revendication précédente, **caractérisé en ce que** ledit circuit de transport de gaz (12) comprend un générateur de mélange gazeux allotropique (22) disposé à être alimenté en oxygène par ladite source d'oxygène (21) et à fournir un mélange d'oxygène allotropique audit moyen d'alimentation en mélange gazeux (23).

8. Appareil pour la production d'espèces réactives de l'oxygène ou de l'azote (RONS) selon la revendication 5 ou suivantes, **caractérisé en ce que** ledit circuit de transport comprend (12) des organes générateurs de champ électrique (231) disposés avant l'entrée de ladite chambre de ionisation dudit dispositif de pulvérisation de plasma (24), ledit mélange gazeux étant soumis au passage du champ électrique généré par lesdits organes générateurs de champ électrique (231), lesquels sont capables d'orienter les molécules de gaz dudit mélange gazeux.

9. Appareil pour la production d'espèces réactives de l'oxygène ou de l'azote (RONS) selon la revendication 5 ou suivantes, **caractérisé en ce que** ledit circuit de transport de gaz (12) comprend une source d'azote pour alimenter en azote, dans une quantité réglable de manière appropriée, ledit dispositif de pulvérisation de plasma (24) ou ledit générateur de mélange gazeux allotropique (22).

10. Appareil pour la production d'espèces réactives de l'oxygène ou de l'azote (RONS) selon la revendication 5 ou suivantes, **caractérisé en ce que** ledit circuit de transport de fluide (11) comprend au moins un capteur associé à ladite pompe péristaltique (15) et apte à compter le nombre de thérapies effectuées ou le temps de fonctionnement de ladite pompe (15), ledit capteur étant relié à des moyens de commande dudit appareil qui interrompent le fonctionnement de l'appareil lui-même lorsqu'une valeur prédéfinie du nombre de thérapies ou du temps de fonctionnement est atteinte, afin de permettre le remplacement dudit filtre à membrane semi-perméable (14).
